Europäisches Patentamt

European Patent Office

Office européen des brevets

(11) Publication number: **0 206 052**
**B1**

# EUROPEAN PATENT SPECIFICATION

(45) Date of publication of patent specification: **14.11.90**

(51) Int. Cl.⁵: **B 23 Q 3/08, B 23 Q 11/00**

(21) Application number: **86107725.3**

(22) Date of filing: **06.06.86**

(54) Fixturing apparatus and machine tool system.

(30) Priority: **17.06.85 US 745473**

(43) Date of publication of application:
**30.12.86 Bulletin 86/52**

(45) Publication of the grant of the patent:
**14.11.90 Bulletin 90/46**

(84) Designated Contracting States:
**CH DE FR GB IT LI SE**

(56) References cited:
**DE-A-2 650 621**
**DE-A-3 027 477**
**US-A-3 056 319**
**US-A-3 953 918**

(73) Proprietor: **Cincinnati Milacron Inc.**
**(a corporation existing under the laws of Ohio),**
**4701,Marburg Avenue**
**Cincinnati Ohio 45209 (US)**

(72) Inventor: **Hoffman, James R.**
**9861 Lorelei Drive**
**Cincinnati Ohio 45231 (US)**

(74) Representative: **Lally, William et al**
**FORRESTER & BOEHMERT Widenmayerstrasse**
**4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a fixturing apparatus for holding a workpiece during a machining operation and to a machine tool system for performing a machining operation on a workpiece held by a fixturing apparatus. In a more particular sense this invention relates to a hydraulic clamp fixturing apparatus for holding workpieces during the machining thereof and to a machine tool system having a hydraulic clamp fixturing apparatus.

The shaping of a workpiece, more particularly a metallic workpiece, by a machine tool by cutting, grinding drilling etc. involves the fixing of the workpiece in a rigid position. In some cases the workpiece is releasably fixed directly to the table of a machine tool (e.g. milling machine) by manually operated screw clamps while in other cases the workpiece may be held in a manually or hydraulically operated vice that is attached to the table. Often the workpiece is releasably fixed by manual or fluid (e.g. oil and compressed air) operated clamps, to a support (e.g. tee post, square column, cubes, plates and angle plate) that is in turn manually attached to the table or other workpiece holding element of the machine tool. The combination of the support, clamps and auxiliary equipment (e.g. jacks, blocks, locators etc.) associated with the releasable fixing of, the workpiece to the support is commonly known as a fixture or fixturing apparatus.

With the advent of automatic machine tools, flexible manufacturing systems (FMS) and unattended machine tools (i.e. machine tools performing machining operations without the presence of machine operators) there has been increased use of hydraulic clamping to fix (i.e. hold) the workpiece during the machining operation because of the reliability, speed and ease of such clamping. Thus, with the automatic machine tools, FMS and unattended machine tools the workpiece may be automatically loaded onto the support remote from the machine tool, such as by a robot, the workpiece automatically clamped and the fixture, with the workpiece attached, automatically positioned for the machining operation. In the alternative the workpiece may be loaded onto the support and the hydraulic clamping activated manually.

It is especially prevalent in automatic machining systems to move the fixture, having the workpiece attached thereto, from one machine tool to another machine tool to accomplish different machining operations on the workpiece (e.g. facing, boring, drilling and tapping). This movement may be achieved in several different manners (e.g. conveyors and automatic guided vehicles) and usually involves mounting the fixture or fixturing apparatus on a pallet that is in turn locked in position at the machine tool.

The achieving and maintaining of sufficient clamping force on the workpiece to hold it securely during the machining operation and during transport is very important. Insufficient clamping force can result in the dislodging of the workpiece with the resultant danger of personal injuries, damage to the machine tool, damage or loss of the workpiece and damage to surrounding equipment. The concern for achieving and more particularly maintaining sufficient clamping force in hydraulic systems for clamping workpieces is especially heightened in the automatic machine tools, flexible manufacturing systems and unmanned machine tools and it is important for the protection of, personnel, these machine tools, the work holding system (i.e. fixture) and equipment in the vicinity of the machining operation to be able to shut down a machine tool or otherwise stop a machining operation immediately when insufficient clamping force is present to safely hold the workpiece in the fixturing apparatus.

It is therefore an object of this invention to provide a fixturing apparatus for holding a workpiece wherein the apparatus is provided with a monitoring means for monitoring the clamping force applied to the workpiece and a signal generating means for providing a signal in response to an insufficient clamping force.

According to this invention there is provided a fixturing apparatus for holding a workpiece during machining operation comprising:

a) a support means to receive the workpiece;

b) a hydraulically operated workpiece clamping means for rigidly holding the workpiece in a fixed position relative to said support means; and

c) supply means for furnishing hydraulic fluid to the clamping means; characterised by

d) sensing means coupled to the supply means for sensing hydraulic fluid pressure;

e) an electromagnetic or sound wave signal generator means electrically controlled by said sensing means, for producing an electromagnetic or sound wave signal to be transmitted through air; and

f) a receiver means remote from the signal generator means which is adapted to receive the signal from the signal generator means and which is responsive to produce an emergency machining termination instruction.

Further in accordance with this invention there is provided a machine tool system for machining a workpiece comprising: a) a machine for performing a machining operation on the workpiece said machine comprising: I) elements for linearly moving, rotating and grasping a tool for performing the workpiece machining operation; and 2) a control means for directing the movement of the machine elements; b) a fixturing apparatus for holding the workpiece during the maching operation of the machine comprising: 1) a support means having a surface adapted to receive the workpiece; 2) a hydraulically operated workpiece clamping means on the surface, employing hydraulic fluid pressure, for rigidly holding the workpiece in a fixed position relative to said support means; and 3) supply means for furnishing hydraulic fluid to the clamping means; characterised in that the fixturing apparatus comprises 4) sensing means coupled to the supply means for sensing hydraulic fluid pressure; and

5) an electromagnetic or sound wave signal generator means electrically controlled by the sensing means for producing an electromagnetic or sound wave signal; and the machine comprises c) a receiver means remote from the fixturing apparatus adapted to receive the signal from the wave signal generator means and connected to the control means for producing an emergency machining termination instruction in response to said signal.

Preferably the fixturing apparatus also comprises a hydraulic fluid accumulator means. The wave signal generator may be a high frequency sound generator but is preferably an electromagnetic generator to produce an infrared signal or a radio frequency signal.

The support means comprises at least one normally vertical workpiece receiving surface, preferably four such surfaces.

Preferably battery means is provided for supplying an electric current via said switch means to said generator means. Advantageously an electrical connector means is provided for the establishment of an electric current from a source remote to the fixturing apparatus to the said generator means via said switch means.

In a general operating sense in accordance with this invention an unsafe workpiece holding condition resulting from the reduction or loss of hydraulic fluid pressure operating the clamps for holding the workpiece is detected by a pressure detecting switch on the fixturing apparatus to produce an electric impulse and an electromagnetic wave signal generated by a signal generating means on the fixturing apparatus in response to an electric impulse produced as a result of that pressure reduction or loss. The electromagnetic wave signal is picked up by a receiver, remote from the fixturing apparatus, adapted to receive that signal, which in turn produces a command signal that is transmitted to the control apparatus of the machine. In response to the command signal the control apparatus directs the machine to immediately terminate the machining operation on the workpiece thereby preventing or reducing damage that could be caused by the dislodged workpiece.

There will now be given a detailed description, to be read with reference to the accompanying drawings, of a machine tool system, comprising a fixturing apparatus, which system and apparatus have been selected for the purposes of illustrating the invention by way of example.

In the accompanying drawings:

Figure 1 is a schematic representation of one aspect of the fixturing apparatus and machine system in accordance with the invention;

Figure 2 shows a schematic representation another aspect of the fixturing apparatus and machine system in accordance with this invention;

Figure 3 is a isometric view of a fixturing apparatus in accordance with this invention;

Figure 4 presents in side elevation view, a fixturing apparatus according to this invention with a workpiece in place thereon;

Figure 5 shows a top planar view of the fixturing apparatus shown in Figure 4 and

Figure 6 provides a representation of a fixturing apparatus and a machine system in accordance with this invention in side elevation view.

This invention will now be described in further detail with reference to the drawings and in respect to a preferred practice thereof that advantageously increases the safe use of fixturing apparatus having hydraulic fluid operated clamps for holding the workpiece and provide machine tool systems of increased safety by having such fixturing apparatus for holding the workpiece during the machining thereof.

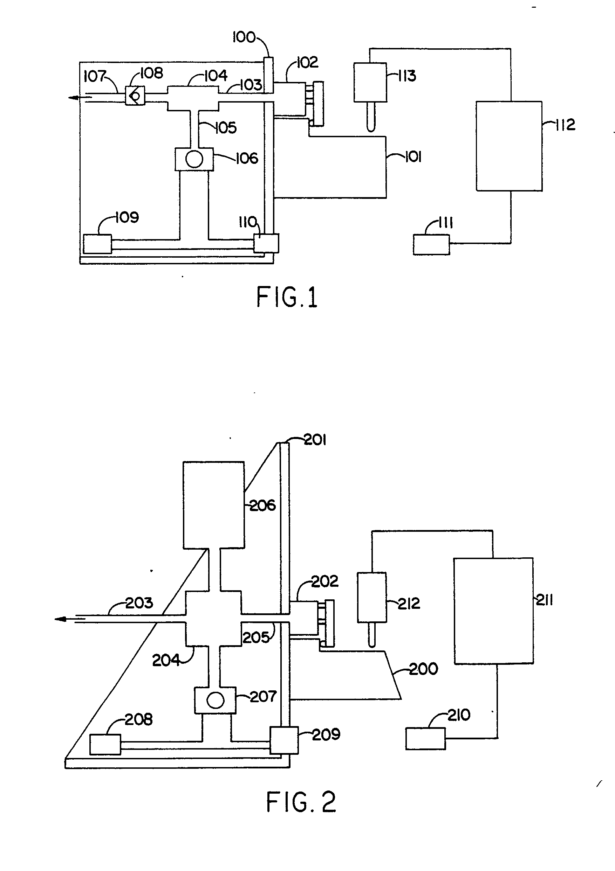

Turning to Figure 1 there is a schematically represented one practice of this invention. A workpiece 101 is held on support 100 by hydraulic fluid operated clamp 102 supplied with hydraulic fluid by metal conduit 103 connected to a distribution block 104. Also connected by metal conduit 105 to block 104 is an electrohydraulic pressure switch 106 for detecting a hydraulic fluid pressure, in the hydraulic circuit, below a preset value. Hydraulic fluid under pressure is supplied through metal conduit 107 and one way valve 108 to distribution block 104 from an outside source not shown. Pressure switch 106 connected to a source of electricity 109, (e.g. battery) and to the electromagnetic wave signal generator 110 senses a hydraulic fluid pressure below that required for operating clamp 102 that in turn would decrease or destroy the clamping force holding workpiece 101 and passes an electric current to generator 110. In response to that electric current generator 110 produces an electromagnetic wave signal (e.g. infrared radiation signal) that is transmitted through air to a remotely positioned receiver 111 which upon receiving the signal produces an emergency machining termination command instruction that is sent to the control apparatus 112 of the machine. The control apparatus 112 processes the instruction and causes an emergency termination of the machining operation of tool 113 on workpiece 101. Such termination of the machining operation may be the stopping of the rotation of tool 113 or may be the disengagement of tool 113 from workpiece 101.

In Figure 2 is schematically shown another practice of this invention. A workpiece 200 (e.g. metal casting) is held in support 201 by hydraulic fluid operated clamp 202 for machining (e.g. milling). The hydraulic fluid for the operaton of clamp 202 is supplied under pressure from an outside source, not shown, through conduit 203, distribution block 204 and conduit 205 connected between clamp 202 and block 204. Also connected to distribution block 204 are accumulator 206, for maintaining a supply of hydraulic fluid under pressure to clamp 202, and electrohydraulic pressure switch 207, for detecting a hydraulic fluid pressure below some preset value. The accumulator 206 may by one of a variety of known accumulators (e.g. spring load piston and membrane accumulators). It is of course readily apparent to provide a hydraulic fluid cut off (e.g.

valve or quick disconnect) on conduit 203 when isolating the fixturing apparatus from the source of hydraulic fluid. Pressure switch 207 is connected to a source of electricity 208 (e.g. battery) and to the electromagnetic wave signal generator 209. Hydraulic fluid under pressure supplied to clamp 202 causes clamp 202 to exert a holding force on workpiece 200. A minimum hydraulic pressure is required to exert sufficient holding force to hold workpiece 200 in place during the machining thereof. When less than the minimum hydraulic fluid pressure is present at clamp 202 the holding force on workpiece 200 will be insufficient for safe machining (i.e. hold workpiece 200 in place during machining) and workpiece 200 would be thrown from the fixturing apparatus (i.e. support 201) causing injury to a machine operator and/or damage to the machine and/or damage to nearby equipment and/or damage to the workpiece. Leaks or failures in the hydraulic components (e.g. conduit connections, hydraulic cylinders, seals etc.) result in a reduction or loss of hydraulic pressure. A hydraulic pressure below a preset value would be detected by the electrohydraulic pressure switch 207 and an electric current supplied through switch 207 from battery 208 to the electromagnetic wave signal generator 209. Generator 209 then produces an electromagnetic wave signal (e.g. infrared, visible light, radio frequency or acoustic signal) that is picked up by receiver 210 remote from generator 209 and the fixturing apparatus. Receiver 210, associated with the machine now produces an emergency machining termination command signal that is transmitted to control apparatus 211, of the machine, which in turn causes tool 212 to immediately terminate the machining operation.

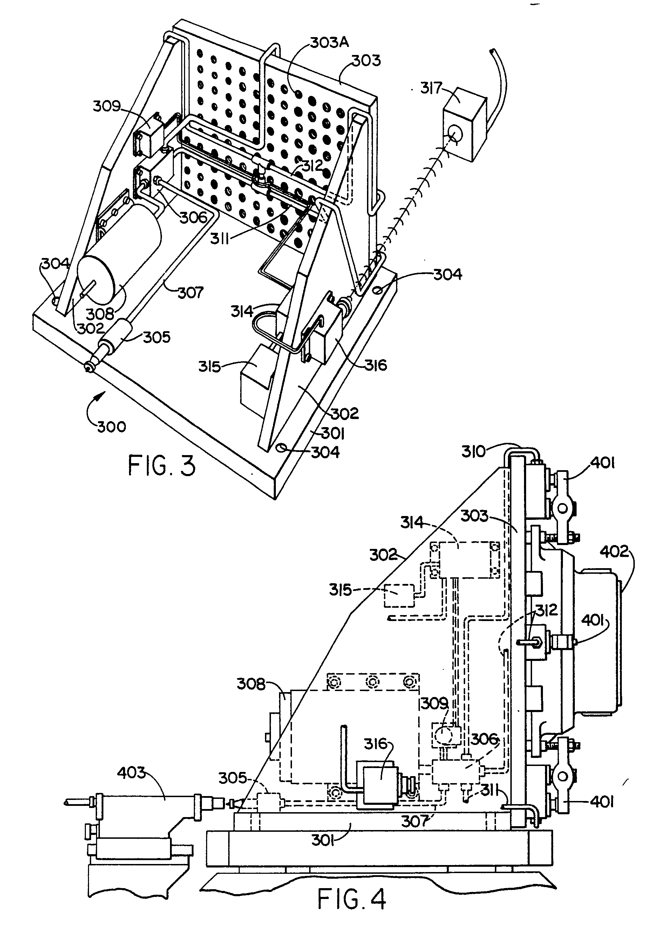

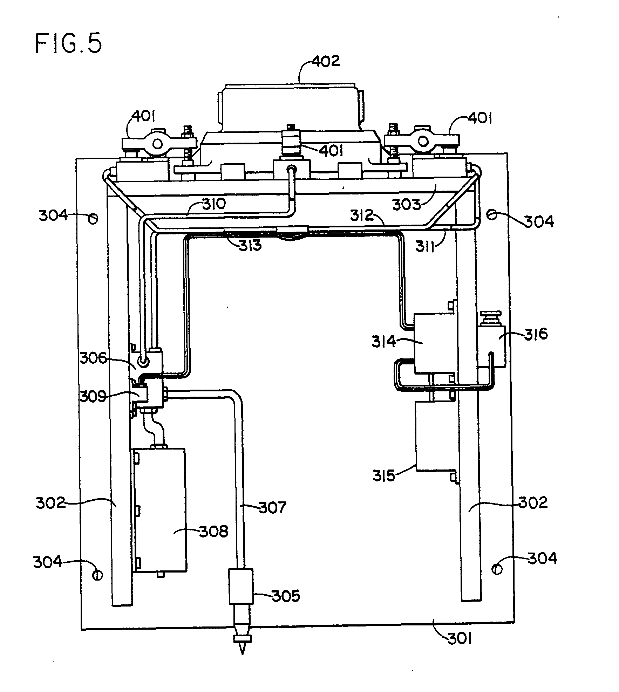

Referring now to Figures 3, 4 and 5 there is shown, in isometric view (Figure 3), side elevation view (Figure 4) and top plan view (Figure 5), a preferred fixturing apparatus in accordance with this invention. The fixturing apparatus 300 has a base 301 and vertical ribs 302 supporting a front vertical plate 303 for mounting a workpiece 402 (Figure 4). The fixturing apparatus 300 may be mounted via holes 304 in base 301 to a pallet, a machine table, automatic guided vehicle or other suitable surface for machining the workpiece. Front plate 303 is provided with a series of threaded holes 303A for mounting workpiece holding and positioning devices. Attached to base 301, ribs 302 and front plate 303 are various components of the fixturing apparatus as shown in Figures 3, 4 and 5. Pressurised hydraulic fluid (e.g. hydraulic oil) from a source not shown is supplied through quick connect assembly 403 (Figure 4), coupled to quick disconnect valve 305 and line 307 to distributor 306 and hence through hydraulic lines 310, 311, 312 and 313 to spring release assisted hydraulic clamps 401. The hydraulic fluid pressure on clamps 401 causes them to exert a holding or clamping force on workpiece 402 to hold it in place on front plate 303 during a machining operation. Upon charging the hydraulic fluid system of fixturing apparatus 300 the fixturing apparatus is disconnected from the supply of hydraulic fluid. Quick disconnect valve 305 has a one way valving system that retains the hydraulic fluid under pressure in the hydraulic circuit of the fixturing apparatus 300 when the fixturing apparatus is disconnected from the source of pressurised hydraulic fluid. In addition to the one way action serving to hold the hydraulic fluid under pressure in the hydraulic circuit of fixturing apparatus 300 valve 305, as is well known in the art, is provided with a relief mechanism whereby under pneumatic or hydraulic pressure the one way action of valve 305 may be deactivated and the hydraulic fluid pressure in the hydraulic fluid circuit of fixturing apparatus 300 relieved to release hydraulic clamps 401 from workpiece 402. Thus when desiring to remove workpiece 402 from support 303 valve 305 is connected to a relief system for the release of the hydraulic pressure in fixturing apparatus 300 to unclamp workpiece 402. Quick disconnect valves having one way action with pressurised overriding of the one way action are well known in the art. During the charging of the hydraulic fluid circuit of fixturing apparatus with pressurised hydraulic fluid accumulator 308 connected to distributor 306 is charged with hydraulic fluid to provide a fluid reservoir and to maintain pressure in the hydraulic circuit in the event of minor leaks in the system after disconnection from the hydraulic fluid source. Accumulators commonly known in the art may be used, however, it is preferred to use a spring loaded piston type accumulator in the practice of this invention.

Although hydraulic fluid lines and equipment are known generally to have good reliability they are, however, subject to leaks and failures for various reasons including wear and part defects. Such leaks and failures in a hydraulic fixturing apparatus during a machining operation create, due to the large forces generated during the machining operation, the potential for unsafe clamping of the workpiece and the resultant throwing of the workpiece from the fixturing apparatus. Under such conditions there can occur serious bodily injury, damage to the machine, damage to the fixturing apparatus, damage to nearby equipment and damage to or loss of the workpiece. In fixturing apparatus 300, according to this invention, there is provided an electrohydraulic switch 309, connected to distribution box 306 by hydraulic tubing in the hydraulic fluid circuit of the fixturing apparatus, to monitor the fluid pressure in the hydraulic circuit. Switch 309, of a type well known in the art, may be set to provide a signal (e.g. electric current) at some pressure value below a predetermined minimum hydraulic pressure for the safe clamping of workpiece 402. When switch 309 detects a hydraulic pressure below a minimum preset value it closes and sends a current from battery 315, to which it is connected through terminal box 314, to an electromagnetic wave signal generator 316 connected to switch 309 and battery 315 at terminal box 314. In turn generator 316 produces an electromagnetic wave signal (e.g. infrared, acoustic, visible light or radio frequency signal), preferably a low power infrared signal, in response to the electric current. The electromagnetic wave signal is directed at and received by a remotely positioned receiver 317 which is in turn connected to the control apparatus, not shown, of a machine, not shown, performing a machining operation on workpiece 402. Upon receiving and in response to the electromagnetic wave signal from generator 316 receiver 317 produces an emergency machining termination command signal that is transmitted to the control apparatus of the machine. The control apparatus then in turn activates the necessary machine elements to immediately terminate the machining operation. Termination of a machining operation may involve any of a number of steps. For example, such termination may be as simple as stopping the rotation of the tool, or it may involve more complicated operations wherein machine elements are moved to disengage the tool from the workpiece. Such steps for the emergency termination of the machining operation may be built into the machine or programmed into a computer control for the machine. The command signal produced by receiver 317 may be as simple as an electric current that would close a switch on the machine to stop rotation of the tool contacting workpiece 402 or on the other hand may be some other type of signal for activating more complicated steps for terminating the machining operation. The control apparatus for the machine may be as simple as a switch or more complicated to include a computer control.

In the practice of this invention there may be employed as alternatives to the quick disconnect valve other valves including for example hand operated and solenoid hydraulic valves known in the art. There may be employed in the practice of this invention electromagnetic wave signal generators as are well known in the art for producing low power infrared, visible light, high frequency (e.g. 19—25 kHz) acoustic and radio frequency signals. The battery may be replaced, in other practices of this invention, by connectors which connect the electrohydraulic pressure switch and electromagnetic wave signal generator of fixturing apparatus to a source of electricity remote from the fixturing apparatus. In the preferred practice of this invention as shown in Figures 3, 4 and 5 there is employed a single workpiece receiving surface (i.e. front plate) at right angles to a base for attaching the fixturing apparatus to a suitable work surface. Such a configuration has only one surface for mounting the workpiece for machining. Other configurations may, however, be used in the practice of this invention including but not limited to a square column having four surfaces at right angles to each other for mounting workpieces and a base for attaching the fixturing apparatus to a suitable work surface.

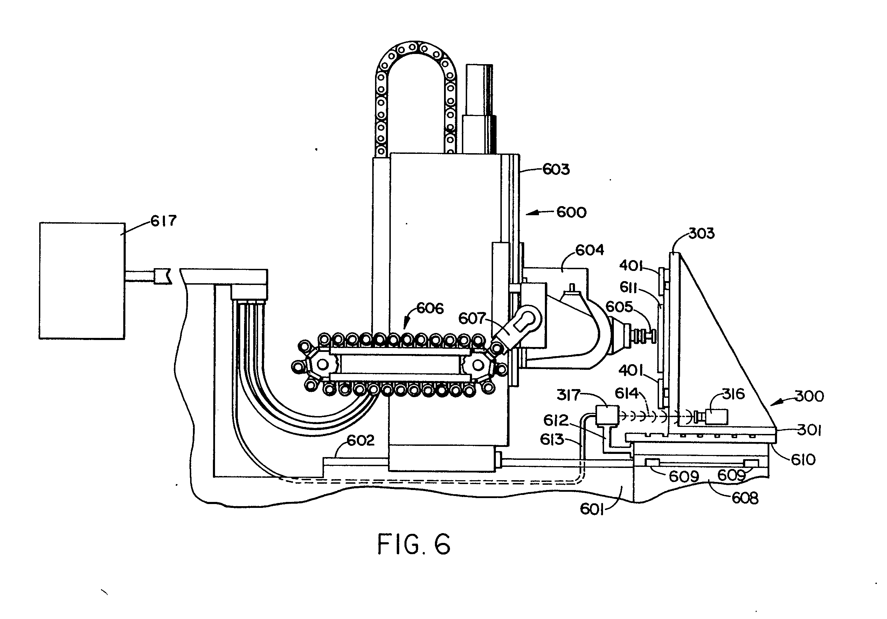

Turning now to Figure 6 there is shown in a side elevation view of a machine system in accordance with this invention for machining a workpiece. The machine 600, of the type more fully disclosed in U.S. 3,953,918, issued May 4, 1976 and assigned to the same assignee of this application, the entire disclosure of which is included herein by reference, has a base 601 to which is attachd ways 602 for mounting column 603 for horizontal movement, mounted for vertical movement on column 603 is a spindle carrier 604 having a milling cutter 605 fixed therein for rotation. The various positions of the spindle mechanism other than the horizontal positions and the portion of the tool changer mechanism for inserting the tool into the spindle mechanism as shown more particularly in Figures 1 and 2 of U.S. 3,953,918 have been omitted from Figure 6 of this disclosure only for reasons of clarity and simplicity in describing this invention. A tool holder assembly 606 for holding various tools is provided in which an arm assembly 607 removes 611 and replaces tools in the tool assembly 606 and transfers the tool to a second arm mechanism (not shown that inserts and removes tools, e.g. milling cutter 605, from the spindle mechanism to change tools. The motions of column 603, spindle carrier 604, milling cutter 605, the tool holder assembly 606, tool changing arm 607 and the tool changing arm not shown are directed by a control apparatus 617 (schematically shown). A base 608 at right angles to base 601 has ways 609 on which is mounted table 610 for horizontal movement normal to the direction of horizontal movement of column 603. Table 610 is provided with a series of T-shots for attaching fixturing apparatus 300, described in Figures 3, 4 and 5, carrying workpiece 611, held thereon by hydraulically operated clamps 401, for machining by milling cutter 605. Fixed to table 610 by bracket 612 is receiver 317 (Figure 3) in signal receiving alignment with electromagnetic wave signal generator 316 of fixturing apparatus 300. Receiver 317 is linked via cable 613 to control apparatus 617. To machine workpiece 612 milling cutter 605 is brought into contact with workpiece 611 by the horizontal movement of column 603 toward table 610. The operation of fixturing apparatus 300 is as hereinbefore described. In the event of a hydraulic failure (i.e. leak or failure of an element of the hydraulic system) producing unsafe clamping of workpiece 611 in the fixturing apparatus 300 during the machining operation or even when the fixturing apparatus 300 with workpiece 611 in place thereon is present on the table 610 of machine 600 without milling cutter 605 contacting workpiece 611 an electromagnetic wave signal 614 is generated by electromagnetic wave signal generator 316 and picked up by receiver 317. Upon receiving the signal receiver 317 produces an emergency termination of machining command signal which is transmitted to the control apparatus 617. In turn control apparatus 617 directs the machine 600 to immediately terminate the machining operation. Such termination of machining may for example occur by stopping the rotation milling cutter 605 or may for example occur by the horizontal movement of column 603 away from table 610 to bring milling cutter 605 out of contact with workpiece 611. The control apparatus 617 may be any one of the machine controls known in the art including for example a computer control. The machining apparatus shown in Figure 6 is an integrated machine for machining a workpiece, a fixturing apparatus for holding the workpiece and a safety system for detecting an unsafe workpiece holding condition, generating a signal in response to the unsafe workpiece holding condition receiving said signal at a remotely positioned receiver and producing a command signal by the receiver for the emergency termination of the machining operation.

It is contemplated in the practice of this invention that other machines for machining can be used and that fixturing apparatus of this invention may be moved from one machine to another machine by any of a variety of well known methods and equipments. Thus, for example, the fixturing apparatus of this invention may be attached to a pallet that may be carried by a conveyor or by an automatic guided vehicle, such as in a flexible manufacturing system, from one machine to another machine. Further, it is contemplated that the receiver for receiving the electromagnetic wave signal may be fixed remote from the fixturing apparatus in various ways (e.g. floor mounted, machine bed mounted etc.) in a signal receiving alignment with the electromagnetic wave signal generator of the fixturing apparatus of this invention. The essential thing being that the remotely positioned receiver be in a signal receiving alignment with the electromagnetic wave signal generator.

As used in this disclosure the term machine has the meaning of an apparutus that performs an operation that removes material from a workpiece (e.g. milling machine, grinder, machining centre, boring machine etc.). The term machining operation as used in this disclosure means an operation that removes material from a workpiece, (e.g. milling, grinding, drilling, tapping and boring). In the context of this disclosure the term workpiece means any solid object on which a machining operation is performed, usually a metal object.

## Claims

1. A fixturing apparatus for holding a workpiece (101, 200, 402, 611) during machining operation comprising:
  a) a support means (100, 201, 303) to receive the workpiece;
  b) a hydraulically operated workpiece clamping means (102, 202, 41) for rigidly holding the workpiece in a fixed position relative to said support means; and
  c) supply means (103, 104, 107, 108, 206) for furnishing hydraulic fluid to the clamping means; characterised by
  d) sensing means (106, 207, 309) coupled to the supply means for sensing hydraulic fluid pressure;
  e) an electromagnetic or sound wave signal generator means (110, 209, 316) electrically controlled by said sensing means, for producing an electromagnetic or sound wave signal to be transmitted through air; and
  f) a receiver means (111, 210, 317) remote from the signal generator means which is adapted to receive the signal from the signal generator means and which is responsive to produce an emergency machining termination instruction.

2. A machine tool system for machining a workpiece comprising:
  a) a machine (600) for performing a machining operation on the workpiece (611), said machine comprising:
    1) elements (602, 603, 604) for linearly moving, rotating and grasping a tool (605) for performing the workpiece machining operation; and
    2) a control means (112, 211, 617) for directing the movement of the machine elements;
  b) a fixturing apparatus (300) for holding the workpiece during the machining operation of the machine comprising:
    1) a support means (100, 201, 303) having a surface adapted to receive the workpiece (101, 200, 402, 611);
    2) a hydraulically operated workpiece clamping means (102, 202, 410) on the surface, employing hydraulic fluid pressure, for rigidly holding the workpiece in a fixed position relative to said support means; and
    3) supply means (103, 104, 107, 108, 206) for furnishing hydraulic fluid to the clamping means; characterised in that the fixturing apparatus comprises
    4) sensing means (106, 207, 309) coupled to the supply means for sensing hydraulic fluid pressure; and
    5) an electromagnetic or sound wave signal generator means (110, 209, 316) electrically controlled by the sensing means (106, 207, 309) for producing an electromagnetic or sound wave signal; and the machine comprises
  c) a receiver means (111, 210, 317) remote from the fixturing apparatus (30) adapted to receive the signal from the wave signal generator means and connected to the control means (112, 211, 617) for producing an emergency machining termination instruction in response to said signal.

3. A machine system according to Claim 2 further comprising means (610) for carrying the fixturing apparatus (300).

4. A machine system according to any one of Claims 2 and 3 wherein the control means (617) comprises a computer control.

5. The invention according to any one of the preceding claims wherein the fixturing apparatus comprises a hydraulic fluid accumulator means (206, 308).

6. The invention according to any one of the preceding claims wherein the support means (100, 201) has a single normally vertical, workpiece receiving surface.

7. The invention according to Claim 6 wherein the support means has four normally vertical, workpiece receiving surfaces.

8. The invention according to any one of the preceding claims wherein the fixturing apparatus comprises a battery means (109) for supplying an electric current via said switch means (106) to said generator means (110).

9. The invention according to any one of the preceding claims comprising an electrical connector means for providing an electric current from a source remote to the fixturing apparatus to said generator means via said switch means.

**Patentansprüche**

1. Aufspannapparat zum Halten eines Werkstückes (101, 200, 402, 611) während der spanabhebenden Bearbeitung, der umfaßt:

a) Haltemittel (100, 201, 303) zum Aufnehmen des Werkstückes;

b) hydraulisch betriebene Werkstückklemmittel (102, 202, 401) zum festen halten des Werkstückes in einer festen Position bezüglich der Haltemittel; und

c) Zuführmittel (103, 104, 107, 108, 206) zum Zuführen von hydraulischem Fluid zu den Klemmitteln, gekennzeichnet durch

d) Sensormittel (106, 207, 309), die an die Zuführmittel angekoppelt sind, zum Erfassen des Druckes des hydraulischen Fluids;

e) Signalgeneratormittel (110, 209, 316) für elektromagnetische oder Schallwellen, die elektrisch von den Sensormitteln überwacht werden, zum Erzeugen eines elektromagnetischen oder Schallwellensignales, das durch die Luft zu übertragen ist; und

f) Empfangsmittel (111, 210, 317) entfernt von den Signalgeneratormitteln, die dazu ausgelegt sind, das Signal von den Signalgeneratormitteln zu empfangen, und damit reagieren, daß sie einen Befehl zum Notstop des Spanabhebens erzeugen.

2. Werkzeugmaschinensystem zum spanabhebenden Bearbeiten eines Werkstücks, das umfaßt:

a) eine Maschine (600), welche das Werkstück (611) spanabhebend bearbeitet, wobei die Maschine umfaßt:

1) Elemente (602, 603, 604) für das lineare Bewegen, die Drehung und das Greifen eines Werkzeugs (605), um das Werkstück unter Spanabhebung zu bearbeiten; und

2) Überwachungsmittel (112, 211, 617) zum Ausrichten der Bewegung der Maschinenelemente;

b) einen Aufspannapparat (300) zum Halten des Werkstückes während der spanabhebenden Bearbeitung der Maschine, der umfaßt:

1) Haltemittel (100, 201, 303) mit einer Oberfläche, die dazu geeignet ist, das Werkstück (101, 200, 402, 611) aufzunehmen;

2) hydraulisch betriebene Werkstückklemmittel (102, 202, 401) auf der Oberfläche, welche Druck eines hydraulischen Fluids erzeugen, zum festen Halten des Werkstückes in einer festen Position bezüglich der Haltemittel; und

3) Zuführmittel (103, 104, 107, 108, 206) zum Zuführen hydraulischen Fluids zu den Klemmitteln; dadurch gekennzeichnet, daß der Aufspannapparat

4) Sensormittel (106, 207, 309), die an den Zuführmittel angekoppelt sind, zum Erfassen des Drucks des hydraulischen Fluides; und

5) Signalgeneratormittel (110, 209, 316) für elektromagnetische oder Schallwellen umfaßt, die elektrisch von den Sensormitteln (106, 207, 309) überwacht werden, zum Erzeugen eines elektromagnetischen oder Schallwellensignales; und daß die Maschine

c) Empfängermittel (111, 210, 317) entfernt von dem Aufspannapparat (300) umfaßt, die dazu ausgelegt sind, das Signal von den Wellensignalgeneratormitteln zu empfangen, und die mit den Überwachungsmitteln (112, 211, 617) verbunden sind, zum Erzeugen eines Befehls zum Notstoppen der spanabhebenden Bearbeitung auf das Signal hin.

3. Maschinensystem nach Anspruch 2, das ferner Mittel (610) zum Tragen des Aufspannapparates (300) umfaßt.

4. Maschinensystem nach einen der Ansprüche 2 und 3, wobei die Überwachungsmittel (617) eine Computerüberwachung beinhalten.

5. Die Erfindung nach einem der vorangehenden Ansprüche, wobei der Aufspannapparat Akkumulatormittel (206, 308) für hydraulisches Fluid umfaßt.

6. Die Erfindung nach einem der vorangehenden Ansprüche, wobei die Haltemittel (100, 201) eine einzelne, normalerweise vertikale Werkstückaufnahmeoberfläche umfassen.

7. Die Erfindung nach Anspruch 6, wobei die Haltemittel vier normalerweise vertikale Werkstückaufnahmeoberflächen umfassen.

8. Die Erfindung nach einem der vorangehenden Ansprüche, wobei der Aufspannapparat Batteriemittel (109) zum Abgeben eines elektrischen Stromes an die Generatormittel (110) über die Schaltmittel (106) umfaßt.

9. Die Erfindung nach einem der vorangehenden Ansprüche, die elektrische Verbindungsmittel zum Abgeben eines elektrischen Stromes von einer von dem Aufspannapparatus entfernten Quelle an die Generatormittel über die Schaltmittel umfaßt.

**Revendications**

1. Appareil de serrage destiné à maintenir une pièce à usiner (101, 200, 402, 611) pendant l'opération d'usinage, comprenant:

a) un support (100, 201, 303) destiné à recevoir la pièce à usiner;

b) un dispositif de bridage de la pièce à usiner actionné hydrauliquement (102, 202, 401) de façon à la maintenir rigidement dans une position fixe par rapport au support; et

c) un dispositif d'alimentation (103, 104, 107, 108, 206) destiné à amener le fluide hydraulique au dispositif de bridage; caractérisé par

d) un dispositif de détection (106, 207, 309) accouplé au dispositif d'alimentation destiné à détecter la pression du fluide hydraulique;

e) un générateur de signaux d'ondes électromagnétiques ou acoustiques (110, 209, 316) commandé électriquement par le dispositif de détection, destiné à produire un signal d'ondes électromagnétiques ou acoustiques à transmettre par air; et

f) un récepteur (111, 210, 317) éloigné du générateur de signaux qui est apte à recevoir le signal provenant du générateur de signaux et qui est sensible à ce signal pour produire une instruction d'urgence de fin d'usinage.

2. Système de machine-outil destiné à usiner une pièce comprenant:

a) une machine (600) destinée à effectuer une opération d'usinage sur la pièce (611), cette machine comprenant:

1) des éléments (602, 603, 604) destinés à déplacer linéairement, mettre en rotation et à saisir un outil (605) pour l'exécution des opérations d'usinage de la pièce; et

2) un dispositif de commande (112, 211, 617) pour diriger le mouvement des éléments de la machine;

b) un appareil de fixation (300) pour maintenir la pièce à usiner pendant l'opération d'usinage de la machine comprenant:

1) un support (100, 201, 303) ayant une surface apte à recevoir la pièce à usiner (101, 200, 402, 611);

2) un dispositif de bridage de pièce à usiner actionné hydrauliquement (102, 202, 401) sur la surface, employant la pression du fluide hydraulique, pour le maintien de façon rigide de la pièce à usiner dans une position fixe par rapport au support;

3) des moyens d'alimentation (103, 104, 107, 108, 206) destinés à amener le fluide hydraulique au dispositif de bridage; caractérisé en ce que l'appareil de fixation comprend

4) un dispositif de détection (106, 207, 309) accouplé aux moyens d'alimentation destiné à détecter la pression du fluide hydraulique; et

5) un générateur de signaux d'ondes électromagnétiques ou acoustiques (110, 209, 316) commandé électriquement par le dispositif de détection (106, 207, 309) pour produire un signal d'ondes électromagnétiques ou acoustiques; et la machine comprend

c) un récepteur (111, 210, 317) éloigné de l'appareil de fixation (300), apte à recevoir le signal provenant du générateur de signaux d'ondes et relié au dispositif de commande (112, 211, 617) pour produire une instruction d'urgence de fin d'usinage en réponse à ce signal.

3. Système de machine selon la revendication 2, comprenant de plus des moyens (610) pour supporter l'appareil de fixation (300).

4. Système de machine selon l'une quelconque des revendications 2 et 3, dans lequel le moyen de commande (617) comprend une commande par ordinateur.

5. Invention selon l'une quelconque des revendications précédentes, dans laquelle l'appareil de fixation comprend un accumulateur de fluide hydraulique (206, 308).

6. Invention selon l'une quelconque des revendications précédentes, dans laquelle le support (100, 201) comporte un seul plan de réception de pièce à usiner normalement vertical.

7. Invention selon la revendication 6, dans laquelle le support comporte quatre plans de réception de pièce à usiner normalement verticaux.

8. Invention selon l'une quelconque des revendications précédentes, dans laquelle l'appareil de fixation comprend une batterie (109) destinée à fournir un courant électrique au générateur (110) par l'intermédiaire d'un dispositif de commutation (106).

9. Invention selon l'une quelconque des revendications précédentes, comprenant un connecteur électrique destiné à fournir un courant électrique au générateur à partir d'une source éloignée de l'appareil de fixation par l'intermédiaire du dispositif de commutation.

FIG.1

FIG.2

FIG. 3

FIG. 4

# FIG.5

FIG. 6